# EUROPÄISCHE PATENTSCHRIFT

(11) **EP 2 582 562 B1**
(45) Veröffentlichungstag und Bekanntmachung des Hinweises auf die Patenterteilung: **01.04.2015**
(21) Anmeldenummer: 11718078.6
(22) Anmeldetag: 05.05.2011
(51) Int. Cl.: B60W 30/188, B60W 10/06, B60W 10/30, B60W 50/00

(54) **Verfahren zum Betreiben eines Antriebsstrangs**
Method for operating a drive train
Procédé d'entraînement une chaîne cinématique

(30) Priorität: 17.06.2010 DE 102010030247
(43) Veröffentlichungstag der Anmeldung: 24.04.2013
(73) Patentinhaber: ZF Friedrichshafen AG, 88038 Friedrichshafen (DE)
(72) Erfinder: BANERJEE, Alexander, 88094 Oberteuringen (DE); HUNOLD, Bernard, 88046 Friedrichshafen (DE)
(86) Internationale Anmeldenummer: PCT/EP2011/057167
(87) Internationale Veröffentlichungsnummer: WO 2011/157481

(56) Entgegenhaltungen:
- EP-A2- 0 811 757
- EP-A2- 0 888 920
- WO-A1-2004/097264
- DE-A1- 10 035 431
- FR-A1- 2 763 901

## Beschreibung

Die Erfindung betrifft ein Verfahren zum Betreiben eines Antriebsstrangs eines Kraftfahrzeugs nach dem Oberbegriff des Anspruchs 1.

Beispielgebend ist aus der WO 2004/097264 A1 ein Verfahren zum Betreiben eines Antriebsstranges eines Kraftfahrzeuges mit einem einen Verbrennungsmotor umfassenden Antriebsaggregat und einem zwischen das Antriebsaggregat und einen Abtrieb geschalteten Getriebe bekannt, wobei ein motorseitiger Nebenabtrieb über ein Stufenlosgetriebe und einen Generator derart an den Verbrennungsmotor koppelbar ist, dass der Generator bei laufendem Verbrennungsmotor unabhängig von der Drehzahl desselben mit einer konstanten Drehzahl antreibbar ist, um dem motorseitigen Nebenabtrieb über den Generator eine definierte elektrische Versorgung zum Betreiben des motorseitigen Nebenabtriebs zuzuführen, wobei eine Zustandsgröße des motorseitigen Nebenabtriebs, der hinsichtlich seiner zu regelnden Zustandsgröße eine Speichereigenschaft aufweist, über einen dem motorseitigen Nebenabtrieb zugeordneten Regler zwischen Grenzwerten eingeregelt wird.

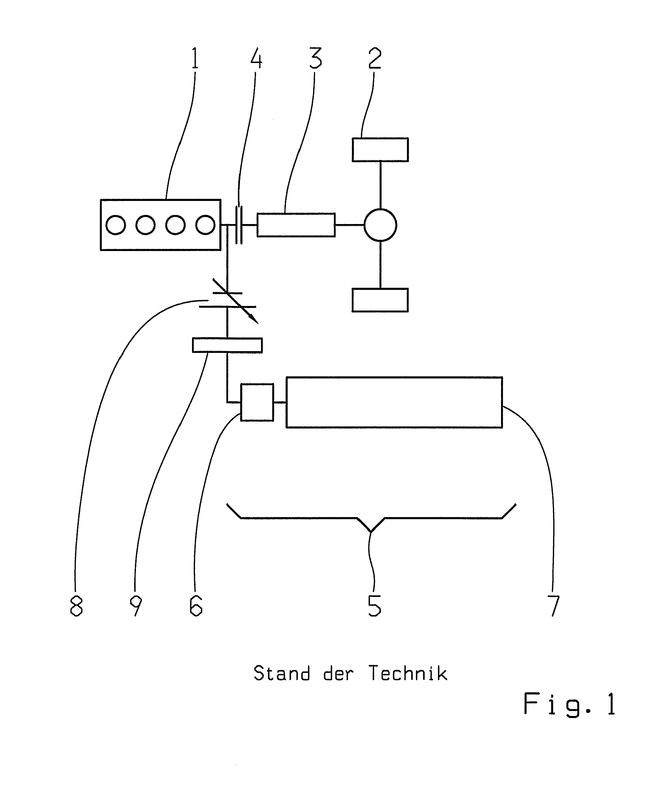

Fig. 1 zeigt den grundsätzlichen, aus dem Stand der Technik bekannten Aufbau eines Antriebsstrangs eines Kraftfahrzeugs mit einem motorseitigen Nebenabtrieb. So umfasst der Antriebsstrang der Fig. 1 ein Antriebsaggregat, welches von einem Verbrennungsmotor 1 gebildet wird, wobei zwischen den Verbrennungsmotor 1 und einen Abtrieb 2 ein Getriebe 3 geschaltet ist. Das Getriebe 3 wandelt Drehzahlen und Drehmomente und stellt so ein Zugkraftangebot des Verbrennungsmotors 1 am Abtrieb 2 bereit. Zwischen den Verbrennungsmotor 1 und das Getriebe 3 ist beim Antriebsstrang der Fig. 1 eine Kupplung 4 geschaltet, über die der Verbrennungsmotor 1 vom Abtrieb 2 abgekoppelt bzw. an denselben angekoppelt werden kann, und die insbesondere als getriebeexternes Anfahrelement dient. Alternativ kann auch ein getriebeinternes Anfahrelement vorhanden sein.

Der Antriebsstrang der Fig. 1 verfügt weiterhin über einen motorseitigen Nebenabtrieb 5, der im gezeigten Ausführungsbeispiel von einem Kühlaggregat 6 und einem vom Kühlaggregat 6 zu kühlenden Kühlauflieger 7 gebildet wird. Der motorseitige Nebenabtrieb 5, der auch als motorseitiger PTO (Power Take Out) bezeichnet wird, ist über ein Stufenlosgetriebe 8 und einen Generator 9 derart an den Verbrennungsmotor 1 gekoppelt, dass das Stufenlosgetriebe 8 bei laufendem Verbrennungsmotor 1 unabhängig von der tatsächlichen Drehzahl des Verbrennungsmotors 1 eine in etwa konstante Drehzahl zum Antrieb des Generators 9 bereitstellt, sodass der Generator 9 unabhängig von der tatsächlichen Drehzahl des Verbrennungsmotors 1 für den Betrieb des Nebenabtrieb 5 eine definierte, elektrische Versorgung bereitstellen kann. Beim Stufenlosgetriebe 8 handelt es sich hier um ein hydraulisches Stufenlosgetriebe. Das Stufenlosgetriebe 8 kann aber auch als mechanisches Stufenlos getriebe oder als elektrisches, beispielsweise zwei elektrische Maschinen und zwei Wechselrichter aufweisendes Stufenlosgetriebe ausgeführt sein.

Insbesondere stellt der Generator 9 unabhängig von der tatsächlichen Drehzahl des Verbrennungsmotors 1 eine definierte elektrische Wechselspannung, die durch ein definiertes Spannungspotential und eine definierte Spannungsfrequenz gekennzeichnet ist, für den Betrieb des Nebenabtriebs 5 bereit.

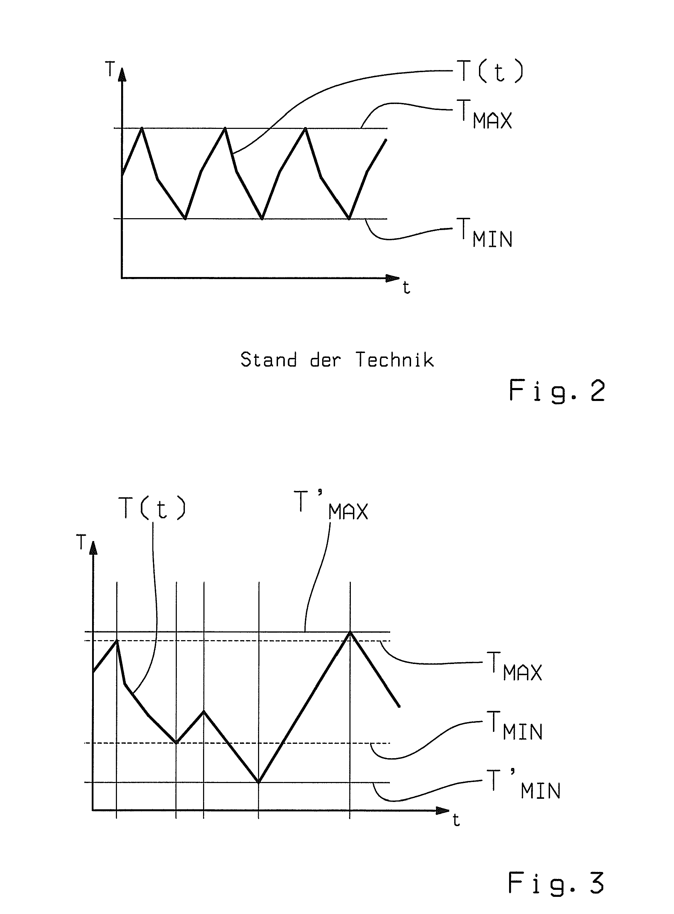

Nach dem Stand der Technik wird zum Betreiben eines solchen Antriebsstrangs mit einem motorseitigen Nebenabtrieb 5 so vorgegangen, dass eine Zustandsgröße des motorseitigen Nebenabtriebs 5, der hinsichtlich dieser Zustandsgröße eine Speichereigenschaft aufweist, über einen dem motorseitigen Nebenabtrieb 5 zugeordneten Regler geregelt wird. In Fig. 2 ist als Zustandsgröße für den motorseitigen Nebenabtrieb 5 der Fig. 1, der das Kühlaggregat 6 und den Kühlauflieger 7 umfasst, eine Temperatur T im Kühlauflieger 7 gezeigt, die über einen Regler des Kühlaggregats 6 zwischen zwei Grenzwerten T_{MIN} und T_{MAX} derart eingeregelt wird, dass die Temperatur im Kühlauflieger 7, die sich über der Zeit t ändert, zwischen diesen Grenzwerten schwankt.

Hierzu kommt nach dem Stand der Technik als Regler des Kühlaggregats 6 ein 2-Punkt-Regler zum Einsatz. Ein solcher 2-Punkt-Regler vergleicht ausschließlich, ob der Ist-Wert der Zustandsgröße, also gemäß Fig. 2 die Ist-Temperatur, sich innerhalb der Grenzwerte befindet, wobei abhängig hiervon der Nebenabtrieb 5, nämlich im Ausführungsbeispiel der Fig. 1 das Kühlaggregat 6, entweder am Verbrennungsmotor 1 Energie bzw. Leistung abnimmt oder nicht.

Aus energetischer Sicht ist ein solcher Betrieb des Antriebsstrangs ungünstig. Insbesondere kann sich hierdurch am Verbrennungsmotor ein hoher Kraftstoffbedarf ausbilden. Es besteht daher Bedarf an einem Verfahren zum Betreiben eines Antriebsstrangs mit einem motorseitigen Nebenabtrieb, mithilfe dessen der Kraftstoffverbrauch reduziert werden kann.

Hiervon ausgehend liegt der vorliegenden Erfindung das Problem zu Grunde, ein neuartiges Verfahren zum Betreiben eines Antriebsstrangs zu schaffen.

Dieses Problem wird durch ein Verfahren gemäß Anspruch 1 gelöst. Erfindungsgemäß erfolgt die Regelung der Zustandsgröße des motorseitigen Nebenabtriebs abhängig vom aktuellen Ist-Wert der Zustandgröße, abhängig von den Grenzwerten der Zustandsgröße und abhängig von einer aktuellen Fahrsituation und/oder abhängig von der zukünftigen Fahrsituation des Kraftfahrzeugs derart, dass im Regler abhängig von diesen Eingangsdaten Parameter für eine Energiezufuhr zum motorseitigen Nebenabtrieb und damit für eine entsprechende Energieentnahme am Verbrennungsmotor bestimmt werden.

Das erfindungsgemäße Verfahren erlaubt einen aus energetischer Sicht vorteilhaften Betrieb eines Antriebsstrangs mit einem motorseitigen Nebenabtrieb. Insbesondere kann ein Kraftstoffbedarf bzw. Kraftstoffverbrauch reduziert werden.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1: ein Blockschaltbild eines Antriebsstrangs;
- Fig. 2: ein Diagramm zur Verdeutlichung des aus dem Stand der Technik bekannten Verfahrens zum Betreiben eines Antriebsstrangs; und
- Fig. 3: ein Diagramm zur Verdeutlichung des erfindungsgemäßen Verfahrens zum Betreiben eines Antriebsstrangs.

Die hier vorliegende Erfindung betrifft ein Verfahren zum Betreiben eines Antriebsstrangs eines Kraftfahrzeugs mit einem motorseitigen Nebenabtrieb, insbesondere des in Fig. 1 gezeigten Antriebsstrangs.

Obwohl die Erfindung nachfolgend für dieses bevorzugte Ausführungsbeispiel eines Antriebsstrangs beschrieben wird, soll bereits an dieser Stelle darauf hingewiesen werden, dass das erfindungsgemäße Verfahren auch bei anderen Antriebsstrangkonfigurationen mit einem motorseitigen Nebenabtrieb zum Einsatz kommen kann.

Die Erfindung ist nicht auf den Einsatz bei Antriebssträngen begrenzt, deren motorseitiger Nebenabtrieb von einem Kühlaggregat und Kühlauflieger gebildet wird, vielmehr können auch Antriebsstränge mit anderen Nebenabtrieben, die hinsichtlich ihrer zu regelnden Zustandsgröße eine Speichereigenschaft aufweisen, mit dem erfindungsgemäßen Verfahren betrieben werden, so zum Beispiel Antriebsstränge, bei deren Nebenabtrieben es sich um hydraulische Nebenabtriebe handelt.

Im Sinne der hier vorliegenden Erfindung wird zur Regelung einer zu regelnden Zustandsgröße eines motorseitigen Nebenabtriebs so vorgegangen, dass die Regelung der Zustandsgröße des motorseitigen Nebenabtriebs abhängig vom aktuellen Ist-Wert der zu regelnden Zustandsgröße, abhängig von den Grenzwerten der Zustandsgröße sowie abhängig von einer aktuellen Fahrsituation und/oder abhängig von einer zukünftigen Fahrsituation des Kraftfahrzeugs erfolgt, nämlich derart, dass im Regler abhängig von diesen Eingangsdaten, also abhängig vom aktuellen Ist-Wert der Zustandsgröße, abhängig von den Grenzwerten derselben sowie abhängig von der aktuellen und/oder zukünftigen Fahrsituation des Kraftfahrzeugs, Parameter für eine Energiezufuhr zum motorseitigen Nebenabtrieb 5 und damit für eine entsprechende Energieentnahme am Verbrennungsmotor 1 bestimmt werden.

Bei den Parametern für die Energiezufuhr zum motorseitigen Nebenabtrieb 5 bzw. die entsprechende Energieentnahme am Verbrennungsmotor 1 handelt es sich um Zeitpunkte und/oder Zeitdauern und/oder Potentiale der Energiezufuhr zum Nebenabtrieb 5 und damit der Energieentnahme vom Verbrennungsmotor 1.

Nach einer vorteilhaften Weiterbildung der Erfindung wird hierbei so vorgegangen, dass dann, wenn der Regler abhängig von der aktuellen Fahrsituation des Kraftfahrzeugs und/oder abhängig von der zukünftigen Fahrsituation des Kraftfahrzeugs feststellt, dass für eine erforderliche Energiezufuhr zum motorseitigen Nebenabtrieb 5 und damit für eine entsprechende Energieentnahme am Verbrennungsmotor 1 der Verbrennungsmotor 1 in einem wirkungsgradungünstigen Betriebspunkt betrieben wird, ausgelöst durch den Regler am Verbrennungsmotor 1 eine Lastpunktverschiebung, insbesondere eine Lastpunktanhebung, durchführt wird, nämlich derart, dass in Folge der Lastpunktverschiebung der Verbrennungsmotor 1 in einem Betriebspunkt mit einem minimalen spezifischen Kraftstoffverbrauch betrieben wird. Hiermit kann dann ein besonders effizienter Betrieb des Antriebsstrangs realisiert werden.

Nach einer weiteren vorteilhaften Weiterbildung der hier vorliegenden Erfindung wird dann, wenn der Regler abhängig von einer aktuellen Fahrsituation des Kraftfahrzeugs und/oder abhängig von der zukünftigen Fahrsituation des Kraftfahrzeugs feststellt, dass ein aktuelles Rekuperationspotential und/oder ein zukünftiges Rekuperationspotential am Antriebsstrang, nämlich am Abtrieb 2 desselben, vorliegt, die Parameter der Energiezufuhr zum motorseitigen Nebenabtrieb 5 und damit die entsprechende Energieentnahme am Verbrennungsmotor 1 abhängig von dem jeweiligen Rekuperationspotential bestimmt, sodass das jeweilige Rekuperationspotential möglichst weitgehend zum Betrieb des motorseitigen Nebenabtriebs 5 ausgenutzt werden kann.

Nach einer weiteren vorteilhaften Weiterbildung der Erfindung kann der Regler abhängig vom aktuellen Ist-Wert der Zustandsgröße sowie abhängig von der aktuellen und/oder zukünftigen Fahrsituation des Kraftfahrzeugs mindestens einen Grenzwert für die zu regelnde Zustandsgröße modifizieren, um einen wirkungsgradoptimalen Betrieb des Antriebsstrangs zu gewährleisten.

Als Daten über die aktuelle Fahrsituation wird insbesondere die aktuelle Fahrbahnneigung und/oder der aktuelle Betriebspunkt des Verbrennungsmotors 1 und/oder die aktuelle Verkehrssituation berücksichtigt.

Die aktuelle Fahrbahnneigung kann von einem Neigungssensor des Antriebsstrangs gemessen oder rechnerisch ermittelt werden.

Als Daten über die zukünftige Fahrsituation wird insbesondere die zukünftige Fahrbahnneigung entlang einer voraus liegenden Fahrtstrecke und/oder die zukünftige Verkehrssituation entlang einer voraus liegenden Fahrtstrecke berücksichtigt.

Die zukünftige Fahrbahnneigung entlang einer voraus liegenden Fahrtstrecke, also topologische Daten der voraus liegenden Fahrtstrecke, können zum Beispiel von einem Navigationssystem bereitgestellt werden. Daten über die zukünftige Verkehrssituation entlang einer voraus liegenden Fahrtstrecke, so zum Beispiel Daten über einen Stau sowie über Geschwindigkeitsbegrenzungen entlang der voraus liegenden Fahrtstrecke, können ebenfalls von einem Navigationssystem bereitgestellt werden.

Es liegt demnach im Sinne des erfindungsgemäßen Verfahrens, die Regelung einer Zustandsgröße eines motorseitigen Nebenabtriebs zumindest abhängig von dem aktuellen Ist-Wert der Zustandsgröße, abhängig von Grenzwerten für die Zustandsgröße sowie abhängig von einer aktuellen und/oder zukünftigen Fahrsituation des Kraftfahrzeugs zu gestalten.

Abhängig hiervon können Zeitpunkte, Zeitdauern und Potentiale der Leistungszufuhr zum motorseitigen Nebenabtrieb 5 und damit der Leistungsentnahme vom Verbrennungsmotor 1 bestimmt werden, wobei zur Wirkungsgradoptimierung am Verbrennungsmotor 1 eine Lastpunktverschiebung durchgeführt wird und/oder Rekuperationspotentiale am Antriebsstrang möglichst weitgehend genutzt werden. Ferner können auch Grenzwerte für die Regelung der Zustandsgröße von der aktuellen und/oder zukünftigen Fahrsituation modifiziert werden, uns zwar insbesondere abhängig von der Speichereigenschaft des motorseitigen Nebenabtriebs 5 hinsichtlich seiner zu regelnden Zustandsgröße.

Fig. 3 zeigt einen sich unter Verwendung des erfindungsgemäßen Verfahrens beim Antriebsstrang der Fig. 1 einstellenden, zeitlichen Verlauf einer Zustandsgröße, nämlich der Temperatur T im Kühlauflieger 7, wobei Fig. 3 entnommen werden kann, dass im Sinne der Erfindung die ursprünglichen Grenzwerte T_{MAX} und T_{MIN} für die Regelung modifiziert werden, insbesondere wird der untere Grenzwert T_{MIN} nach unten auf den modifizierten unteren Grenzwert T_{MIN} verschoben, und der obere Grenzwert T_{MAX} wird nach oben auf den modifizierten oberen Grenzwert T'_{MAX} verschoben.

Die Modifizierung des unteren Grenzwerts nach unten erfolgt beim Antriebsstrang der Fig. 1 insbesondere dann, wenn während eines Bremsvorgangs oder während einer Bergabfahrt aktuell Rekuperationspotential am Antriebsstrang zur Verfügung steht, welches dann vorzugsweise genutzt wird, um den Kühlauflieger 7 stark herunterzukühlen, und zwar auch unterhalb des unteren Temperaturgrenzwerts T_{MIN}.

In diesem Fall wird dann die Speichereigenschaft des Kühlaufliegers 7 hinsichtlich seiner Zustandsgröße Temperatur genutzt.

Das Verschieden des oberen Temperaturgrenzwerts T_{MAX} nach oben erfolgt am Antriebsstrang der Fig. 1 insbesondere dann, wenn aufgrund der zukünftigen Fahrsituation vom Regler erkannt wird, dass zukünftig auf Grundlage der voraus liegenden Fahrtstrecke Rekuperationspotential vorhanden ist. In diesem Fall kann dann die Leistungsanforderung durch das Kühlaggregat 6 und die Energieentnahme am Verbrennungsmotor 1 verzögert werden, um dann das voraus liegende Rekuperationspotential für den Betrieb des Kühlaggregats 6 und damit motorseitigen Nebenabtriebs 5 effizient zu nutzen.

### Bezugszeichen

- 1: Verbrennungsmotor
- 2: Abtrieb
- 3: Getriebe
- 4: Kupplung
- 5: motorseitiger Nebenabtrieb
- 6: Kühlaggregat / Regler
- 7: Kühlauflieger
- 8: Stufenlosgetriebe
- 9: Generator

## Patentansprüche

1. Verfahren zum Betreiben eines Antriebsstrangs eines Kraftfahrzeugs mit einem einen Verbrennungsmotor (1) umfassenden Antriebsaggregat und einem zwischen das Antriebsaggregat und einen Abtrieb (2) geschalteten Getriebe (3), wobei ein motorseitiger Nebenabtrieb (5) über ein Stufenlosgetriebe (8) und einen Generator (9) derart an den Verbrennungsmotor (1) koppelbar ist, dass der Generator (9) bei laufenden Verbrennungsmotor (1) unabhängig von der Drehzahl desselben mit einer konstanten Drehzahl antreibbar ist, um dem motorseitigen Nebenabtrieb (5) über den Generator (9) eine definierte elektrische Versorgung zum Betreiben des motorseitigen Nebenabtriebs (5) zuzuführen, wobei eine Zustandsgröße (T) des motorseitigen Nebenabtriebs (5), der hinsichtlich seiner zu regelnden Zustandgröße (T) eine Speichereigenschaft aufweist, über einen dem motorseitigen Nebenabtriebs (5) zugeordneten Regler (6) zwischen Grenzwerten (T_{MIN}, T_{MAX}) eingeregelt wird, **dadurch gekennzeichnet, dass** die Regelung der Zustandsgröße (T) des motorseitigen Nebenabtriebs (5) abhängig vom aktuellen Ist-Wert der Zustandsgröße (T), abhängig von den Grenzwerten der Zustandsgröße (T_{MIN}, T_{MAX}) und abhängig von einer aktuellen Fahrsituation und/oder abhängig von einer zukünftigen Fahrsituation des Kraftfahrzeugs derart erfolgt, dass im Regler (6) abhängig von diesen Eingangsdaten Parameter für eine Energiezufuhr zum motorseitigen Nebenabtrieb (5) und damit für eine entsprechende Energieentnahme am Verbrennungsmotor (1) bestimmt werden.

2. Verfahren nach Anspruch 1, **dadurch gekennzeichnet, dass** dann, wenn der Regler (6) hierbei abhängig von der aktuellen Fahrsituation und/oder der zukünftigen Fahrsituation des Kraftfahrzeugs feststellt, dass für eine erforderliche Energiezufuhr zum motorseitigen Nebenabtrieb (5) und damit für eine entsprechende Energieentnahme am Verbrennungsmotor (1) der Verbrennungsmotor (1) in einem wirkungsgradungünstigen Betriebspunkt betrieben wird, ausgelöst durch den Regler (6) am Verbrennungsmotor (1) eine Lastpunktverschiebung in Richtung auf einen Betriebspunkt mit minimalem spezifischen Kraftstoffverbrauch durchgeführt wird.

3. Verfahren nach Anspruch 1 oder 2, **dadurch gekennzeichnet, dass** dann, wenn der Regler (6) abhängig von der aktuellen Fahrsituation und/oder der zukünftigen Fahrsituation des Kraftfahrzeugs feststellt, dass ein aktuelles Rekuperationspotential und/oder ein zukünftiges Rekuperationspotential am Antriebsstrang vorliegt, die Parameter der Energiezufuhr zum motorseitigen Nebenabtrieb (5) und damit für eine entsprechende Energieentnahme am Verbrennungsmotor (1) abhängig hiervon bestimmt werden.

4. Verfahren nach einem der Ansprüche 1 bis 3, **dadurch gekennzeichnet, dass** vom Regler (6) abhängig vom aktuellen Ist-Wert der Zustandsgröße (T), abhängig von der aktuellen Fahrsituation und/oder abhängig der zukünftigen Fahrsituation des Kraftfahrzeugs mindestens ein Grenzwert (T'_{MIN}, T'_{MAX}) für die zu regeinde Zustandsgröße modifiziert wird.

5. Verfahren nach einem der Ansprüche 1 bis 4, **dadurch gekennzeichnet, dass** als aktuelle Fahrsituation die aktuelle Fahrbahnneigung und/oder der aktuelle Betriebspunkt des Verbrennungsmotors (1) und/oder die aktuelle Verkehrsituation berücksichtigt wird.

6. Verfahren nach einem der Ansprüche 1 bis 5, **dadurch gekennzeichnet, dass** als zukünftige Fahrsituation die zukünftige Fahrbahnneigung entlang einer voraus liegenden Fahrtstrecke und/oder die zukünftige Verkehrsituation entlang einer voraus liegenden Fahrstrecke berücksichtigt wird.

7. Verfahren nach einem der Ansprüche 1 bis 6, **dadurch gekennzeichnet, dass** als Parameter für eine Energiezufuhr zum motorseitigen Nebenabtrieb (5) und damit für eine entsprechende Energieentnahme am Verbrennungsmotor (1) Zeitpunkte und/oder Zeitdauern und/oder Potentiale der Energiezufuhr und damit der Energieentnahme bestimmt werden.

8. Verfahren nach einem der Ansprüche 1 bis 7, **dadurch gekennzeichnet, dass** als motorseitiger Nebenabtrieb (5) ein über ein Kühlaggregat zu kühlender Kühlauflieger (7) des Kraftfahrzeugs betrieben wird, wobei als Zustandsgröße die Temperatur (T) im Kühlauflieger (7) zwischen zwei Temperaturgrenzwerten (T_{MIN}, T_{MAX}) über einen Zwei-Punkt-Regler geregelt wird.

9. Verfahren nach Anspruch 8, **dadurch gekennzeichnet, dass** dann, wenn der Regler (6) abhängig von der aktuellen Fahrsituation des Kraftfahrzeugs ein aktuelles Rekuperationspotential feststellt, abhängig vom aktuellen Ist-Wert der Temperatur (T) ein unterer Temperaturgrenzwerk (T_{MIN}) nach unten verschoben wird, um das aktuelle Rekuperationspotential möglichst weitgehend auszunutzen.

10. Verfahren nach Anspruch 8 oder 9, **dadurch gekennzeichnet, dass** dann, wenn der Regler (6) abhängig von der zukünftigen Fahrsituation des Kraftfahrzeugs ein zukünftiges Rekuperationspotential feststellt, abhängig vom aktuellen Ist-Wert der Temperatur (T) ein oberer Temperaturgrenzwert (T_{MAX}) nach oben verschoben wird, um das zukünftige Rekuperationspotential möglichst weitgehend auszunutzen.

## Claims

1. Method for operating a drive train of a motor vehicle having a drive assembly comprising an internal combustion engine (1), and a transmission (3) which is connected between the drive assembly and an output (2), wherein an engine-side secondary output (5) can be coupled to the internal combustion engine (1) via an infinitely variable transmission (8) and a generator (9), in such a way that when the internal combustion engine (1) is running the generator (9) can be driven at a constant rotational speed independently of the rotational speed of said internal combustion engine (1), in order to feed a defined electrical supply to the engine-side secondary output (5) via the generator (9) in order to operate the engine-side secondary output (5), wherein a state variable (T) of the engine-side secondary output (5), which has a storage property with respect to its state variable (T) to be regulated, is controlled between limiting values (T_{MIN}, T_{MAX}) via a controller (6) which is assigned to the engine-side secondary output (5), **characterized in that** the control of the state variable (T) of the engine-side secondary output (5) takes place as a function of the current actual value of the state variable (T), as a function of the limiting values of the state variable (T_{MIN}, T_{MAX}) and as a function of a current driving situation and/or as a function of a future driving situation of the motor vehicle in such a way that, in the controller (6), parameters for supplying energy to the engine-side secondary output (5), and therefore for corresponding extraction of energy at the internal combustion engine (1) are determined as a function of this input data.

2. Method according to Claim 1, **characterized in that** when the controller (6) detects in this context, as a function of the current driving situation and/or of the future driving situation of the motor vehicle, that the internal combustion engine (1) is operated at an operating point which is favourable for efficiency, for the necessary supplying of energy to the engine-side secondary output (5), and therefore for corresponding extraction of energy at the internal combustion engine (1), a load point shift in the direction of an operating point with minimum specific fuel consumption is carried out triggered by the controller (6) at the internal combustion engine (1).

3. Method according to Claim 1 or 2, **characterized in that** when the controller (6) detects, as a function of the current driving situation and/or of the future driving situation of the motor vehicle, that a current recuperation potential and/or a future recuperation potential are present at the drive train, the parameters of the supplying of energy to the engine-side secondary output (5) and therefore for corresponding extraction of energy at the internal combustion engine (1) are determined as a function thereof.

4. Method according to one of Claims 1 to 3, **characterized in that** at least one limiting value (T'_{MIN}, T'_{MAX}) for the state variable to be controlled is modified by the controller (6) as a function of the current actual value of the state variable (T), as a function of the current driving situation and/or as a function of the future driving situation of the motor vehicle.

5. Method according to one of Claims 1 to 4, **characterized in that** the current inclination of the carriageway and/or the current operating point of the internal combustion engine (1) and/or the current traffic situation are taken into account as the current driving situation.

6. Method according to one of Claims 1 to 5, **characterized in that** the future inclination of the carriageway along a section of route lying ahead and/or the future traffic situation along a section of route lying ahead are taken into account as the future driving situation.

7. Method according to one of Claims 1 to 6, **characterized in that** times or time periods and/or potentials of the supplying of energy and therefore of the extraction of energy are determined as parameters for the supplying of energy to the engine-side secondary output (5) and therefore for corresponding extraction of energy at the internal combustion engine (1).

8. Method according to one of Claims 1 to 7, **characterized in that** a refrigerated semitrailer (7), to be refrigerated by means of a refrigeration unit, of the motor vehicle is operated as an engine-side secondary output (5), wherein the temperature (T) in the refrigerated semitrailer (7) is regulated as a state variable between two temperature limiting values (T_{MIN}, T_{MAX}) by means of a two-point controller.

9. Method according to Claim 8, **characterized in that** when the controller (6) detects a current recuperation potential as a function of the current driving situation of the motor vehicle, a lower temperature limiting value (T_{MIN}) is shifted downwards as a function of the current actual value of the temperature (T), in order to utilize the current recuperation potential as far as possible.

10. Method according to Claim 8 or 9, **characterized in that** when the controller (6) detects a future recuperation potential as a function of the future driving situation of the motor vehicle, an upper temperature limiting value (T_{MAX}) is shifted upwards as a function of the current actual value of the temperature (T), in order to utilize the future recuperation potential as far as possible.

## Revendications

1. Procédé pour faire fonctionner une chaîne cinématique d'un véhicule automobile avec un groupe motopropulseur comprenant un moteur à combustion interne (1) et avec une transmission (3) montée entre le groupe motopropulseur et une prise de force (2), une prise de force auxiliaire (5) du côté du moteur pouvant être accouplée par le biais d'une transmission à variation continue (8) et d'un générateur (9) au moteur à combustion interne (1) de telle sorte que le générateur (9), lorsque le moteur à combustion interne (1) tourne, puisse être entraîné indépendamment du régime de ce dernier avec un régime constant, afin d'acheminer à la prise de force auxiliaire (5) du côté du moteur par le biais du générateur (9) une alimentation électrique définie pour le fonctionnement de la prise de force auxiliaire (5) du côté du moteur, une grandeur d'état (T) de la prise de force auxiliaire (5) du côté du moteur, qui présente, en termes de sa grandeur d'état à réguler (T), une propriété d'accumulation, étant ajustée par le biais d'un régulateur (6) associé à la prise de force auxiliaire (5) du côté du moteur entre des valeurs limites (T_{MIN}, T_{MAX}), **caractérisé en ce que** la régulation de la grandeur d'état (T) de la prise de force auxiliaire (5) du côté du moteur s'effectue en fonction de la valeur réelle actuelle de la grandeur d'état (T), en fonction des valeurs limites (T_{MIN}, T_{MAX}) de la grandeur d'état et en fonction d'une situation de conduite actuelle et/ou en fonction d'une situation de conduite future du véhicule automobile, de telle sorte que des paramètres soient déterminés dans le régulateur (6) en fonction de ces données d'entrée pour une alimentation en énergie à la prise de force auxiliaire (5) du côté du moteur et par conséquent pour un prélèvement d'énergie correspondant au niveau du moteur à combustion interne (1).

2. Procédé selon la revendication 1, **caractérisé en ce que** lorsque le régulateur (6) établit, en fonction de la situation de conduite actuelle et/ou de la situation de conduite future du véhicule automobile, que pour une alimentation en énergie nécessaire à la prise de force auxiliaire (5) du côté du moteur et par conséquent pour un prélèvement d'énergie correspondant au niveau du moteur à combustion interne (1), le moteur à combustion interne (1) fonctionne dans un point de fonctionnement favorable du point de vue du rendement, un déplacement du point de charge, déclenché par le régulateur (6) au niveau du moteur à combustion interne (1), est effectué dans la direction d'un point de fonctionnement avec une consommation de carburant spécifique minimale.

3. Procédé selon la revendication 1 ou 2, **caractérisé en ce que** lorsque le régulateur (6) établit, en fonction de la situation de conduite actuelle et/ou de la situation de conduite future du véhicule automobile, qu'un potentiel de récupération actuel et/ou un potentiel de récupération futur existent au niveau de la chaîne cinématique, les paramètres d'alimentation en énergie à la prise de force auxiliaire (5) du côté du moteur et par conséquent pour un prélèvement d'énergie correspondant au niveau du moteur à combustion interne (1) sont déterminés en fonction de celui-ci.

4. Procédé selon l'une quelconque des revendications 1 à 3, **caractérisé en ce qu'**au moins une valeur limite (T'_{MIN}, T'_{MAX}) pour la grandeur d'état à réguler est modifiée par le régulateur (6) en fonction de la valeur réelle actuelle de la grandeur d'état (T), en fonction de la situation de conduite actuelle et/ou en fonction de la situation de conduite future du véhicule automobile.

5. Procédé selon l'une quelconque des revendications 1 à 4, **caractérisé en ce que** l'inclinaison de la chaussée actuelle et/ou le point de fonctionnement actuel du moteur à combustion interne (1) et/ou la situation actuelle de la circulation sont pris en compte en tant que situation de conduite actuelle.

6. Procédé selon l'une quelconque des revendications 1 à 5, **caractérisé en ce que** l'inclinaison de la chaussée future le long d'une section de route plus en avant et/ou la situation future de la circulation le long d'une section de route plus en avant sont prises en compte en tant que situation de conduite future.

7. Procédé selon l'une quelconque des revendications 1 à 6, **caractérisé en ce que** l'on détermine en tant que paramètre pour une alimentation en énergie à la prise de force auxiliaire (5) du côté du moteur et par conséquent pour un prélèvement d'énergie correspondant au niveau du moteur à combustion interne (1) des instants et/ou des durées et/ou des potentiels d'alimentation en énergie et par conséquent de prélèvement d'énergie.

8. Procédé selon l'une quelconque des revendications 1 à 7, **caractérisé en ce que** l'on entraîne en tant que prise de force auxiliaire (5) du côté du moteur une semi-remorque frigorifique (7) du véhicule automobile devant être refroidie par une unité de refroidissement, la température (T) dans la semi-remorque frigorifique (7) étant régulée en tant que grandeur d'état entre deux valeurs limites de température (T_{MIN}, T_{MAX}) par le biais d'un régulateur à deux points.

9. Procédé selon la revendication 8, **caractérisé en ce que** lorsque le régulateur (6) établit, en fonction de la situation de conduite actuelle du véhicule automobile, un potentiel de récupération actuel, une valeur limite de température inférieure (T_{MIN}) est déplacée vers le bas en fonction de la valeur réelle actuelle de la température (T) afin d'exploiter autant que possible le potentiel de récupération actuel.

10. Procédé selon la revendication 8 ou 9, **caractérisé en ce que** lorsque le régulateur (6) établit, en fonction de la situation de conduite future du véhicule automobile, un potentiel de récupération futur, une valeur limite de température supérieure (T_{MAX}) est déplacée vers le haut en fonction de la valeur réelle actuelle de la température (T), afin d'exploiter autant que possible le potentiel de récupération futur.
